(19) Europäisches Patentamt
European Patent Office
Office européen des brevets

(11) **EP 3 376 259 A1**

(12) **EUROPEAN PATENT APPLICATION**
published in accordance with Art. 153(4) EPC

(43) Date of publication:
**19.09.2018 Bulletin 2018/38**

(51) Int Cl.:
***G01T 1/204*** *(2006.01)*

(21) Application number: **16819585.7**

(86) International application number:
**PCT/ES2016/070799**

(22) Date of filing: **10.11.2016**

(87) International publication number:
**WO 2017/081349 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.11.2015 ES 201531626**

(71) Applicants:
• **Scientifica International S.L.U.**
  **20870 Elgoibar - Guipúzcoa (ES)**
• **Centro De Investigaciones Energéticas, Medioambien**
  **28040 Madrid (ES)**

(72) Inventors:
• **NUÑEZ, José Manuel**
  **20870 Elgoibar - Guipúzcoa (ES)**
• **LANDER, González Larrea**
  **20870 Elgoibar - Guipúzcoa (ES)**
• **TRINITARIO, Martínez Pérez**
  **28040 Madrid (ES)**
• **DANIEL, Cano Ott**
  **28040 Madrid (ES)**

(74) Representative: **Balder IP Law, S.L.**
  **Paseo de la Castellana 93**
  **5ª planta**
  **28046 Madrid (ES)**

(54) **SCINTILLATION PARTICLE DETECTOR PROVIDED WITH AN EXPANSION CHAMBER**

(57) A scintillation particle detector (1) which comprises a detection cell (2) intended to contain the scintillation liquid (3) and an expansion chamber (4) connected to the detection cell (2), the expansion chamber (4) being intended to absorb volume variations of the liquid (3), wherein the expansion chamber (4) is delimited by an envelope (5) with variable volume.

FIG.1

**Description**

**TECHNICAL FIELD**

The present invention relates to a particle/radiation detector, especially a neutron detector, provided with an expansion chamber connected to the detection cell which allows the volume variations of the scintillating liquid to be absorbed, which are due to the temperature variations, and which does so avoiding the production of bubbles and the increase of pressure in the scintillating liquid.

**BACKGROUND OF THE INVENTION**

Scintillation particle detectors are already known which comprise a detection cell intended to contain the scintillation liquid and an expansion chamber connected to the detection cell, the expansion chamber being intended to absorb volume variations of the liquid.

The liquid volume variations are produced by temperature variations. These variations may be produced during its use, for example in areas without temperature control, although they mainly occur during transport and storage. This volume variation may be around 5% due to the high dilatation coefficients of the liquids used in the scintillation particle detectors with liquid as a detection means and in order to provide a safety margin, it is possible to require that the chamber is capable of absorbing up to 10% of volume increase of the detection liquid. These dilatations should be absorbed as if not, they may damage or even disable the detector which is an expensive device.

A known example of these types of detectors is described for example in the document published with number RU2087923C and which relates to a particle detector with position detection.

In this document, the expansion chamber consists of one or a plurality of capillaries connected to the detection cell such that when the volume of the scintillating detection liquid is increased, the excess of liquid is expanded through the capillary(ies).

One advantage of the capillaries is that the superficial tensions are high in comparison to gravity which means these expansion chambers can work in any orientation such as for example in an inverted orientation.

However, the inventors of the object of the present application have determined that in detectors provided with expansion chambers formed by capillaries, bubbles are produced which divide the liquid in the capillary into various sections reducing its efficiency. The bubbles are a phenomenon to be avoided since their presence causes considerable measurement errors.

Furthermore, the reduced section for the passage of fluid from the capillaries involves a loss of charge which, in the case of rapid dilatation of the detection liquid, may cause undesired pressure increases.

**DESCRIPTION OF THE INVENTION**

In order to provide a solution to the mentioned drawbacks of the state of the art, the present invention proposes a scintillation particle detector which comprises a detection cell intended to contain the scintillation liquid and an expansion chamber connected to the detection cell, the expansion chamber is intended to absorb volume variations of the liquid.

In accordance with the present invention, the expansion chamber is delimited by an envelope with variable volume.

This inventive solution solves the drawbacks posed by the capillaries since it allows expansion chambers to be designed with much larger volumes, with larger sections for the passage of liquid and without the need for there to be a surface free of contact with a gas.

Furthermore, the ratio between the volume which the expansion chamber occupies by itself and the liquid expansion volume which it provides is greater than in the case of the capillaries. If in the case of the capillaries, the ratio between the expansion volume ($V_{exp}$) and the total volume ($V_{total}$) is approximately such that:

$$V_{exp} = 0.25 * Vtotal$$

According to the present invention, the following may be achieved:

$$V_{exp} = 0.7 * Vtotal$$

The expansion chamber is preferably closed such that the production of bubbles during the dilatation and contraction processes is avoided, which is typical of chambers provided with capillaries.

"Closed" should be understood as the envelope being in contact over its entire interior surface with the scintillation liquid which does not occur in an expansion chamber formed by capillaries, since in said expansion chambers the free surface of the liquid in the capillary is in contact with an inert gas, normally nitrogen. Obviously, the chamber is not closed at its connection to the detection cell. Another way of understanding the term "closed" is that when the detector is operative, the expansion chamber only contains liquid and no gas.

In some embodiments, the envelope is formed at least partially by a deformable sheet anchored at its edges such that it may be deformed, that is to say, change its shape or configuration without being stretched, in order to vary the volume of the expansion chamber such that the pressure changes are minimized during the transfer of scintillation liquid between the detection cell and the expansion chamber.

In these embodiments, as the material forming the envelope, which only changes shape, is not stretched, pressure increases are not produced such as those which could be produced in an embodiment consisting of an inflatable balloon type elastic chamber, the volume increase of which would cause a pressure increase.

According to a variant of the invention, all the volume of the expansion chamber is encased by a deformable envelope.

In this case, the envelope is completely formed by one or a plurality of sheets which may change shape and are anchored at its edges such that they may change shape without being stretched in order to vary the volume of the expansion chamber. Fluoroelastomer may be used as the material of the envelope, although any flexible material may be used which is compatible with the liquid and the working environment.

In this case, a cylindrical expansion chamber may be provided when its largest volume is reached. In this case, the envelope is formed by two elongated sheets joined at their larger edges such that it may change shape between a configuration in which the sheets are adjacent and a configuration in which the sheets have a circular cross section.

In some embodiments, the two sheets have a bottom in the shape of a circular crown or a circular crown section such that when they are separated, they may configure a chamber with a substantially toroidal shape or with a toroid section. This configuration is especially interesting when a toroidal space is provided in the detector which is common in some cylindrical symmetry detectors.

It may also be conceived for the sheets to be arranged in the manner of a bellows, such as for example an accordion. In this case, the volume increase occupied by the expansion chamber in the expansion direction is greater.

According to another variant, only one part of the volume is delimited by a deformable sheet. Effectively, it is not essential for the entire envelope to be deformable, although a chamber geometry should be provided which allows the laminar material forming the deformable part of the envelope not to stretch, but rather for it to deform in the normal direction to the sheet itself.

In this variant, the envelope is formed in part by a deformable sheet, the edges of which are joined to a delimitation surface of the non-deformable envelope. Optionally, the delimitation surface is a non-deformable sheet such as for example a rigid sheet.

According to another option, the delimitation surface of the non-deformable envelope is formed by the exterior surface of the detection cell, the deformable sheet completely surrounding the detection cell which comprises clamps for pressing the edges of the deformable sheet against the exterior surface of the detection cell.

According to another embodiment, a deformable and flexible envelope could be provided, the initial conditions of which would allow stretching of the envelope. In this case however, a pressure increase could be produced in the liquid. This could for example be a spherical volume.

In some embodiments, the detector comprises an element for purging and/or pumping arranged in series between the detection cell and the expansion chamber, this purging and/or pumping element being formed by a purging and/or pumping volume, an envelope, a connection to the detection cell and a connection to the expansion chamber.

In some embodiments, the envelope of the element for purging and/or pumping is made from a flexible material such that the volume of the element is variable.

In some embodiments, the element for purging and/or pumping is provided with a trap for bubbles, that is to say, the connection to the detection cell is a tube which extends towards the interior of the purge volume such that it forms an anti-return device of the bubbles coming from the detection cell.

In some embodiments, the element for purging and/or pumping is an independent element. In others, this element is an integral part of the expansion chamber.

In some embodiments, the element for purging and/or pumping may be connected to the adjacent elements by means of devices or valves with a specific function such as an anti-return device, a multi-way valve and/or a stop valve by way of remote or controlled actuation in order to control the flow.

In some embodiments, the chamber for purging and/or pumping comprises actuation means for varying the volume of the chamber, where the actuation means may be manual or automatic, local or remote.

## BRIEF DESCRIPTION OF THE FIGURES

In order to complement the description being made and with the object of helping to better understand the characteristics of the invention, in accordance with a preferred practical embodiment of the same, said description is accompanied, as an integral part of the same, by a set of figures where, in an illustrative and non-limiting manner, the following has been represented:

Figure 1 is a cross section of a cylindrical symmetry detector.

Figure 2 shows a detail of the chamber intended to adopt a circular shape without expanded volume.

Figure 3 shows a detail of the aspect which the chamber of Figure 2 has when the volume has been expanded.

Figure 4 is a plan view of an embodiment of the envelope.

Figures 5 and 6 show perspectives of the envelope in detail.

Figure 7 shows the dilatation process of the chamber.

Figure 8 shows the lower part of a detector.

Figure 9 shows an elevation view with the transparent upper cover so that the arrangement of the expansion chamber as well as the connection of the same with the lower detection cell may be observed. Figure 10 shows a perspective of the assembly: detection cell, optical guide, expansion chamber and connector between expansion chamber and detection cell.

Figures 11 to 13 show cross sections of another embodiment of the envelope/expansion chamber, based on an envelope which surrounds the detection cell.

Figure 14 shows an embodiment of the element for purging and/or pumping in which the envelope of the element for purging and/or pumping is flexible.

Figure 15 shows the element for purging and/or pumping of Figure 14 in cross-sectional view when a change of the purge volume is caused in order to make the trapped gas or the liquid circulate towards the expansion chamber or in the opposite direction.

Figure 16 shows an embodiment of the element for purging and/or pumping in which the element for purging and/or pumping forms a trap for bubbles.

Figures 17a to 17d show the effect of trapping the gas in the volume for purging and/or pumping.

## DESCRIPTION OF AN EMBODIMENT OF THE INVENTION

As may be observed in the figures, the invention relates to a scintillation particle detector 1 which comprises a detection cell 2 intended to contain the scintillation liquid 3 and an expansion chamber 4 connected to the detection cell 2, the expansion chamber 4 is intended to absorb volume variations of the liquid 3.

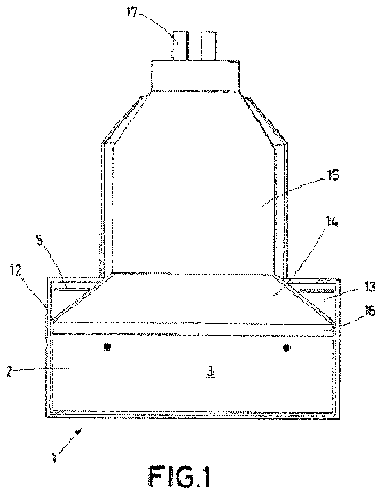

As may be observed in Figure 1, the scintillation detector comprises the following basic characteristics: A receptacle 12 in the interior of which are housed the detection cell 2 which contains the scintillating liquid 3, an optical window 16 preferably made of quartz to which a light guide 14 is joined at the top. A multiplicator tube 15 is coupled via this assembly which ends at the top in a connector 17 for the collection of the detection signal.

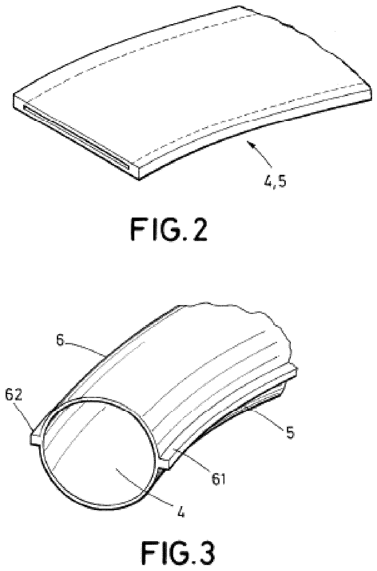

As is illustrated in Figure 3, according to an embodiment of the present invention, the expansion chamber 4 is delimited by an envelope 5 which has variable volume and is closed, except for at its connection to the cell, the envelope 5 being formed at least partially by a deformable sheet 6 anchored at its edges 61, 62 such that it may be deformed without being stretched in order to vary the volume of the expansion chamber 4 such that the pressure changes are minimized during the transfer of scintillation liquid 3 between the detection cells 2 and the expansion chamber 4.

In addition, although the material should be deformable, this does not prevent it from being elastic, although, as is explained below, in these embodiments, the geometry and the extreme conditions of use, maximum dilatation, will not lead to the expansion chamber exceeding a volume in which stretching of the walls ends up being produced.

With respect to the manner in which the laminar deformable material of the envelope should be arranged, it should be arranged such that it may be deformed in order to increase or reduce the volume of the expansion chamber, but without it being stretched. The person skilled in the art may conceive various ways of designing the expansion chamber. Various embodiments of the invention are described below.

Option A the entire volume having a deformable envelope

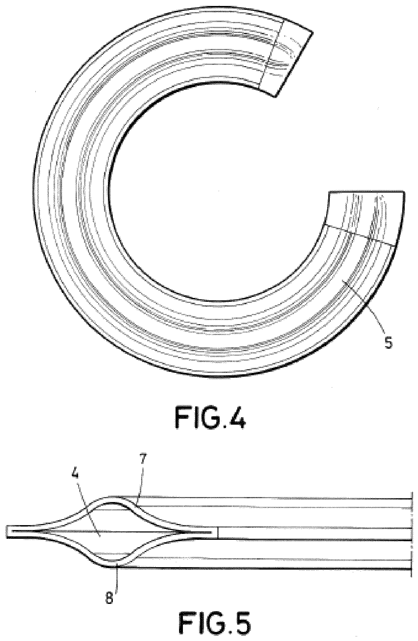

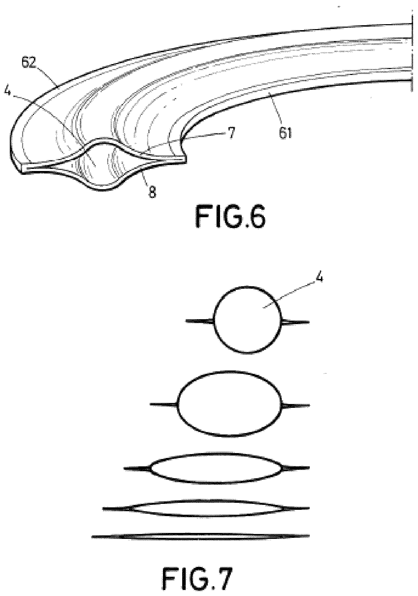

An example of this option is described in the Figures 1 to 10 and in which the envelope 5 is made of fluoroelastomer and is completely formed by one or a plurality of deformable sheets 6, 7, 8 anchored at its edges such that they may be deformed without being stretched in order to vary the volume of the expansion chamber 4. Within this variant, various geometries may be conceived of which two examples are provided below.

Option A1 Cylindrical

In this case, the envelope 5 is formed by two elongated sheets 7, 8 joined at their larger edges 61, 62 such that they may be deformed between a configuration in which the sheets 7, 8 are adjacent and a configuration in which the sheets 7, 8 have a circular cross section, as is shown in Figure 3.

According to an especially adapted embodiment for a detector like the one illustrated in the Figures 1, 8, 9 and 10, the two sheets 7, 8 have a bottom in the shape of a circular crown such that when they are separated, they may configure a chamber with a substantially toroidal shape.

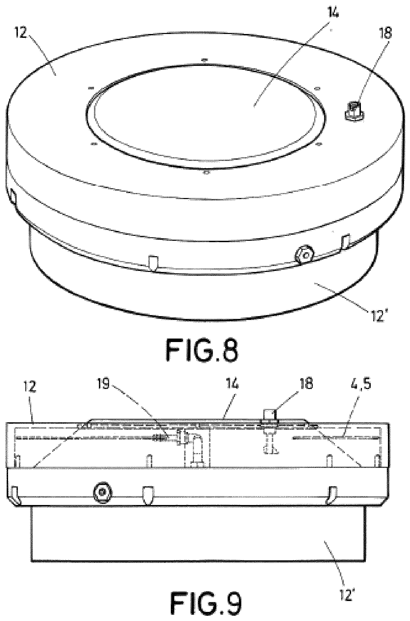

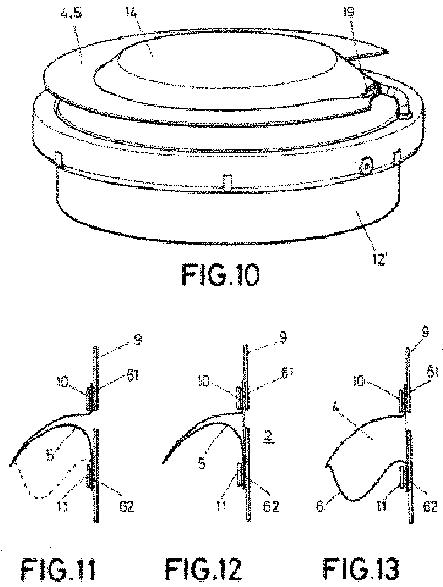

As may be seen in the mentioned figures, between the receptacle 12, 12' and the light guide with tapered section there is a toroidal space in which the annular or toroidal chamber may be housed. The envelope 5 does not encompass the entire perimeter, but rather it is interrupted in order to allow, as is illustrated in Figures 9 and 10, the connection to the detection cell, whether by means of a fitting 19 or more preferably by means of an angled extension which is an extension of the expansion chamber itself and which lowers until being connected to the detection cell 2. In addition, the chamber should leave a space for arranging a calibration port 18 which an optical fiber accesses in order for light pulses to be introduced in order to calibrate the cell.

Option A2 bellows

Another possibility not illustrated is for the sheets to be arranged in the manner of a bellows, that is to say, an accordion.

Option B only one part of the volume is delimited by a deformable sheet.

Another possibility is for the envelope 5 to be formed in part by a deformable sheet 6, the edges of which 61, 62 are joined to a delimitation surface 9 of the non-deformable envelope 5.

Option B1 delimitation surface is a non-deformable sheet

For example, the delimitation surface 9 of the non-deformable envelope 5 could be a rigid sheet, for example with a circular cross section. The other sheet would be joined to the rigid sheet at the top and attached to the same in order to be capable of being inflated and forming a volume with the same.

Another possibility illustrated in Figures 11 to 13 is for the delimitation surface 9 of the non-deformable envelope 5 to be formed by the exterior surface of the detection cell 2, the deformable sheet 6 completely surrounding the detection cell 2 which comprises clamps 10, 11 in order to press the edges 61, 62 of the deformable sheet 6 against the exterior surface of the detection cell 2. The case has been illustrated in which a part of the envelope 5, the upper part with a peak shape in these figures is not deformed since it already has a concave circular shape, while the lower face, as it is convex, is deformed.

Up to now, embodiments have been described in which the envelope is configured such that it may be inflated without the sheet forming the envelope being stretched, that is to say, only by being deformed may the reception volume of the liquid be created which is forced to exit by dilatation of the liquid from the interior of the detection cell.

That said, a closed elastic envelope may also be conceived, the initial shape of which forces it to stretch. As a function of its dimensions and its initial state, it could end up causing a certain pressure increase, unlike the other embodiments. The simplest case would be a spherical envelope.

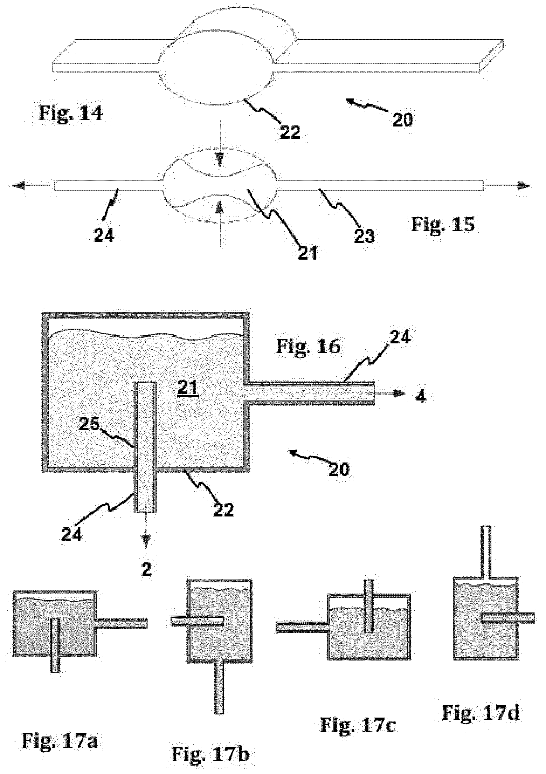

As can be observed in the Figures 14 to 17d, the detector may comprises an element for purging and/or pumping 20 arranged in series between the detection cell 2 and the expansion chamber 4.

For such purpose, the element for purging and/or pumping 20 is formed by a purge volume 21, an envelope 22, a connection 23 to the detection cell 2 and a connection 24 to the expansion chamber 4.

According to the embodiment illustrated in Figures 14 and 15, the envelope 22 of the element for purging and/or pumping 20 is made of a flexible material such that the purging and/or pumping volume 21 is variable. In this case, this involves leaving a relatively short length of chamber free so that it may be expanded like the chamber for purging and/or pumping, stretching the chamber and swelling again to the size of the original expansion chamber so that it involves a continuity of the volume.

This element for purging and/or pumping 20 could be actuated, that is to say, its volume 21 modified, such that it is emptied or there is overpressure and thus the possible bubbles B are moved which are present in any of the areas 2, 4 which connect one to the other. In this embodiment, the inlet and the outlet are aligned with each other.

This actuation, that is to say, the modification of the volume of any of the chambers, may be carried out externally to the detector by means of a manual or automatic device or internally prior to the removal of part of the cell in order to gain access to the same.

According to the embodiments illustrated in Figures 16 to 17d, the element for purging and/or pumping 20 is configured in the form of a trap for bubbles B and the connection 23 to the detection cell 2 (it may also be at the connection to the chamber 4) is a tube 25 which extends towards the interior of the volume for purging and/or pumping 21 such that it forms an anti-return device of the bubbles B coming from the detection cell 2 or from the expansion chamber 4. In this way, any bubble which is introduced into said volume would remain, at least up a certain size, trapped without being able to exit, the cell being at any angle as may be observed in Figures 17a to 17d.

This element for purging and/or pumping 20 may be an independent element or be an integral part of the expansion chamber 4. In other words, the chamber for purging and/or pumping may be integral to the expansion chamber itself or may be a module coupled independently: from the inlet tube to the chamber for purging and/or pumping. The embodiment of Figure 16 may be implemented with rounded shapes such that a variant is obtained which is a combination of the embodiments illustrated in Figures 14 and 16.

The invention may be applied to any scintillation particle/radiation detector which uses a liquid as the detection means, although it is preferably applied to neutron detectors.

In this text, the word "comprises" and its variants such as "comprising", etc should not be interpreted in an exclusionary manner, that is to say, they do not exclude the possibility of what has been described also including other elements.

In addition, the invention is not limited to the specific embodiments which have been described, but rather also encompasses for example the variants which may be carried out by the person skilled in the art, for example in terms of selecting materials, dimensions, components or configuration within the scope of the claims.

**Claims**

1. A scintillation particle detector (1) which comprises a detection cell (2) intended to contain a scintillation liquid (3) and an expansion chamber (4) connected to the detection cell (2), the expansion chamber (4) being intended to absorb volume variations of the liquid (3), **characterized in that** the expansion chamber (4) is delimited by an envelope (5) with variable volume.

2. The detector according to claim 1, wherein the envelope is closed (5) except at its connection to the detection cell (2).

3. The detector according to any of the preceding claims, wherein the envelope (5) is formed at least partially by a deformable sheet (6) anchored at its edges (61, 62) such that it may be deformed without being stretched in order to vary the volume of the expansion chamber (4) such that the pressure changes are minimized during the transfer of scintillation liquid (3) between the detection cell (2) and the expansion chamber (4).

4. The detector according to claim 1 or 2, wherein the envelope (5) is completely formed by one or more deformable sheets (6, 7, 8) which are anchored at its edges such that they may be deformed without being stretched in order to vary the volume of the expansion chamber (4).

5. The detector according to any of the preceding claims, wherein the envelope (5) is made of fluoroelastomer.

6. The detector according to claim 4 or 5, wherein the envelope (5) is formed by two elongated sheets (7, 8) joined at their longitudinal edges (61, 62) such that it may be deformed between a configuration in which the sheets (7, 8) are adjacent and a configuration in which the sheets (7, 8) have a circular cross section.

7. The detector according to claim 4 or 5, wherein the two sheets (7, 8) have a bottom in the shape of a circular crown such that when they are separated, they may configure a chamber with a substantially toroidal shape.

8. The detector according to claim 4 or 5, wherein the sheets (7, 8) are arranged in the manner of a bellows.

9. The detector according to claim 1 or 2, wherein the envelope (5) is formed in part by a deformable sheet (6), the edges of which (61, 62) are joined to a delimitation surface (9) of the non-deformable envelope (5).

10. The detector according to claim 9, wherein the delimitation surface (9) of the non-deformable envelope (5) is a rigid sheet.

11. The detector according to claim 9, wherein the delimitation surface (9) of the non-deformable envelope (5) is formed by the exterior surface of the detection cell (2), the deformable sheet (6) completely surrounding the detection cell (2) which comprises clamps (10, 11) for pressing the edges (61, 62) of the deformable sheet (6) against the exterior surface of the detection cell (2).

12. The detector according to claim 1 or 2, wherein the envelope (5) is elastic such that it may be stretched.

13. The detector according to any of the preceding claims, which comprises an element for purging and/or pumping (20) arranged in series between the detection cell (2) and the expansion chamber (4), this element for purging and/or pumping (20) being formed by a purging and/or pumping volume (21), an envelope (22), a connection (23) to the detection cell (2) and a connection (24) to the expansion chamber (4).

14. The detector according to claim 13, wherein the envelope (22) of the purging and/or pumping element (20) is made of a flexible material such that the volume of the purging and/or pumping element (20) is variable.

15. The detector according to claim 13 or 14, wherein the purging and/or pumping element (20) is provided with a trap for bubbles (B) and wherein the connection (23) to the detection cell (2) is a tube (25) which extends towards the interior of the purging and/or pumping volume (21) such that it forms an anti-return device of the bubbles (B) coming from the detection cell (2).

16. The detector according to any of claims 13 to 15, wherein the element for purging and/or pumping (20) is an independent element.

17. The detector according to any of claims 13 to 15, wherein the element for purging and/or pumping (20) is an integral part of the expansion chamber (4).

18. The detector according to any of claims 13 to 17, wherein the purging and/or pumping element (20) is connected by means of, or further comprises, an anti-return device, a multi-way valve and/or a stop valve by way of remote or controlled actuation in order to control the flow.

19. The detector according to any of claims 13 to 18, which comprises actuation means for varying the volume of the chamber, where the actuation means may be manual or automatic.

20. The detector according to claim 19, wherein the ac-

**EP 3 376 259 A1**

tuation means are local or remote.

FIG.1

4,5

FIG.2

6

62

5

61

4

FIG.3

FIG.4

FIG.5

FIG.6

FIG.7

FIG.8

FIG.9

**FIG.10**

**FIG.11**   **FIG.12**   **FIG.13**

**Fig. 14**

22

20

24

21

23

**Fig. 15**

**Fig. 16**

24

21

4

25

24

20

22

2

**Fig. 17a**

**Fig. 17b**

**Fig. 17c**

**Fig. 17d**

## INTERNATIONAL SEARCH REPORT

| International application No |
|---|
| PCT/ES2016/070799 |

**A. CLASSIFICATION OF SUBJECT MATTER**

INV. G01T1/204
ADD.

According to International Patent Classification (IPC) or to both national classification and IPC

**B. FIELDS SEARCHED**

Minimum documentation searched (classification system followed by classification symbols)

G01T

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | WO 2004/088684 A2 (RONAN ENGINEERING CO [US]; BALDWIN CHARLES E [US]; CARIS CRAIG [US]) 14 October 2004 (2004-10-14) | 1,2,5,12 |
| A | page 1, line 8 - line 13 page 4, line 23 - line 32; figures page 5, line 26 - line 27 page 8, line 18 - page 9, line 9 page 9, line 32 - page 10, line 5 page 11, line 19 - page 12, line 22 ----- | 15 |
| | -/-- | |

| X | Further documents are listed in the continuation of Box C. | | X | See patent family annex. |
|---|---|---|---|---|

\* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 9 February 2017 | 17/02/2017 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Eberle, Katja |
|---|---|

Form PCT/ISA/210 (second sheet) (April 2005)

## INTERNATIONAL SEARCH REPORT

International application No

PCT/ES2016/070799

C(Continuation).   DOCUMENTS CONSIDERED TO BE RELEVANT

| Category* | Citation of document, with indication, where appropriate, of the relevant passages | Relevant to claim No. |
|---|---|---|
| X | THOMAS G E:  "A BORON-LOADED LIQUID SCINTILLATION NEUTRON DETECTOR USING A SINGLE PHOTOMULTIPLIER", NUCLEAR INSTRUMENTS AND METHODS,, vol. 17, no. 2, 1 October 1962 (1962-10-01), pages 137-139, XP001446460, | 1-4,6-8 |
| Y | page 137; figure 1 | 13,14, 16-20 |
| A | ----- | 15 |
| X | ZYCH A D ET AL:  "LARGE AREA DOUBLE SCATTERING TELESCOPE FOR BALLOON-BORNE STUDIES OF NEUTRONS AND GAMMA RAYS", IEEE TRANSACTIONS SCIENCE,, vol. NS-22, no. 1, 1 February 1975 (1975-02-01), pages 605-610, XP001445324, | 1-4,9-11 |
| A | page 606, left-hand column | 15 |
| Y | ----- US 2011/114843 A1 (KUSNER MICHAEL R [US] ET AL) 19 May 2011 (2011-05-19) | 13,14, 16-20 |
| A | paragraph [0060] | 15 |
|  | ----- |  |

Form PCT/ISA/210 (continuation of second sheet) (April 2005)

## INTERNATIONAL SEARCH REPORT
Information on patent family members

International application No

PCT/ES2016/070799

| Patent document cited in search report | | Publication date | Patent family member(s) | | Publication date |
|---|---|---|---|---|---|
| WO 2004088684 | A2 | 14-10-2004 | CA 2520506 | A1 | 14-10-2004 |
| | | | DE 112004000530 | T5 | 19-10-2006 |
| | | | US 2004251416 | A1 | 16-12-2004 |
| | | | WO 2004088684 | A2 | 14-10-2004 |
| US 2011114843 | A1 | 19-05-2011 | US 2011114843 | A1 | 19-05-2011 |
| | | | WO 2011063154 | A2 | 26-05-2011 |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2087923 C